# EUROPEAN PATENT APPLICATION

(11) **EP 1 791 049 A1**
(43) Date of publication of application: **30.05.2007**
(21) Application number: 05111337.1
(22) Date of filing: 25.11.2005
(51) Int. Cl.: G06F 1/16, G06F 1/20

(54) **Portable electronic device and heat-dissipation method and battery charger thereof**

(71) Applicant: High Tech Computer Corp., Taoyuan (TW)
(72) Inventor: Huang, Yi-Chang, Xindian City, Taipei County (TW); Lin, Yao-Chung, Xindian City, Taipei County (TW)
(74) Representative: Blasberg, Tilo

(57) **Abstract**

A heat-dissipation method comprises providing a heat- transfer module (130) and a heat-dissipation module (210), wherein the heat-transfer module is disposed in a portable electronic device (100), and the heat-dissipation module is disposed in a battery charger (200). The heat-dissipation module (210) then contacts the heat-transfer module (130) to remove heat from the electronic device via conduction. Finally, the heat-dissipation module dissipates heat via conduction or convection.

## Description

### BACKGROUND

The invention relates to a portable electronic device and a heat-dissipation method thereof, and more particularly to a heat-dissipation method dissipating heat via a battery charger.

When a portable electronic device (for example, a personal digital assistant or a cell phone) is charged, heat produced by chips is transferred to the battery, light emitting elements or other electronic elements therein via circuit board, and raises the temperature thereof. This can damage electronic elements and shorten product lifespan. Battery charging generates a high temperature that may cause a battery (for example, lithium battery) to explode. Specifically, an inner temperature of the portable electronic device is raised when the device engages in wireless network communication or other operation with high energy consumption in charging.

### SUMMARY

An embodiment of a heat-dissipation method comprises providing a heat-transfer module and a heat-dissipation module, wherein the heat-transfer module is disposed in a portable electronic device, and the heat-dissipation module is disposed in a battery charger. The heat-dissipation module then contacts the heat-transfer module to remove heat from the electronic device via conduction. Finally, the heat-dissipation module dissipates heat via conduction or convection.

The invention lowers an inner temperature of the portable electronic device, extends the lifespan thereof, and prevents an explosion of the battery.

### DESCRIPTION OF THE DRAWINGS

The invention will be more fully understood from the following detailed description and the accompanying drawings, given by the way of illustration only and thus not intended to limit the invention.
Fig. 1 shows a portable electronic device placed in a battery charger;
Fig. 2a shows inner structures of a portable electronic device and a battery charger of a first embodiment of the invention;
Fig. 2b shows an inner structure of the portable electronic device of the first embodiment of the invention;
Fig. 2c shows an inner structure of the battery charger of the first embodiment of the invention;
Fig. 3 shows heat dissipated by the first embodiment of the invention;
Fig. 4a is a sectional view of the portable electronic device and the battery charger along direction A-A of Fig. 2a;
Fig. 4b shows a heat-transfer module and nearby structure of the first embodiment of the invention;
Fig. 4c shows the heat-transfer module abutting a heat-transfer element of the first embodiment of the invention;
Fig. 4d shows a modified example of the first embodiment of the invention;
Fig. 5a shows an inner structure of a portable electronic device of the second embodiment of the invention;
Fig. 5b shows a heat-transfer module and nearby structure of the second embodiment of the invention;
Fig. 5c shows the portable electronic device of the second embodiment placed in a battery charger;
Fig. 5d shows the heat-transfer module abutting a heat-transfer element of the second embodiment of the invention.

### DETAILED DESCRIPTION

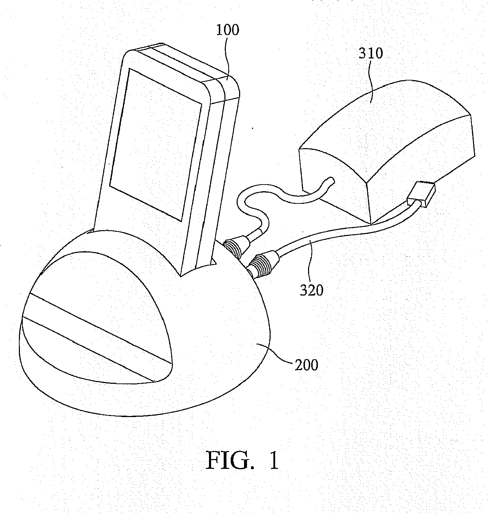

With reference to Fig. 1, a heat-dissipation module in the battery charger 200 dissipates heat from the portable electronic device 100, reduces the temperature therein, extends lifespan thereof, and prevents explosion of the battery when a portable electronic device (personal digital assistant) 100 is placed in a battery charger 200.

### First embodiment

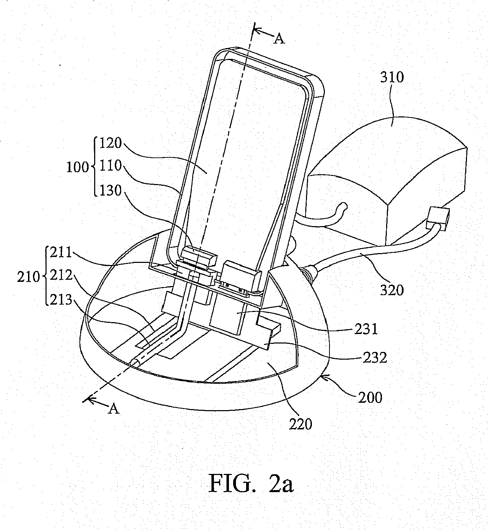

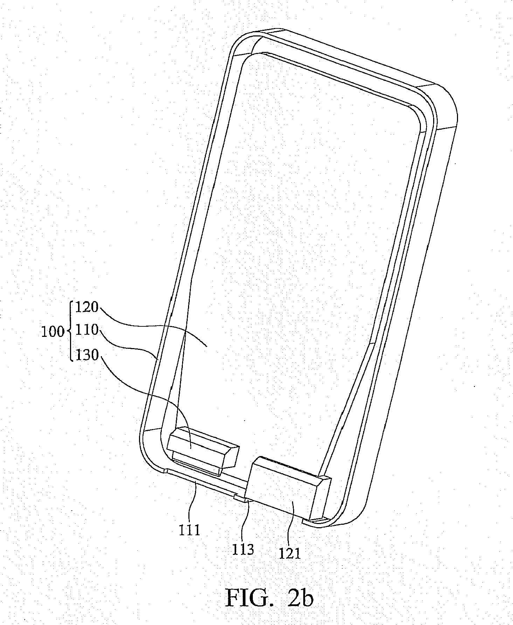

Fig. 2a shows inner structures of a portable electronic device 100 and a battery charger 200 of a first embodiment of the invention. In the following, the portable electronic device 100 and the battery charger 200 are described respectively. As shown in Fig. 2b, the portable electronic device 100 comprises a housing 110, a first circuit board 120 and a heat-transfer module 130. The housing 110 comprises a first opening 111 and a third opening 113. The first circuit board 120 and the heat-transfer module 130 are disposed in the housing 110. The heat-transfer module 130 is disposed on an isolation region (a region with no circuit formed thereon) on the first circuit board 120 corresponding to the first opening 111. The first circuit board 120 comprises an universal serial bus (USB) port 121 corresponding to the third opening 113.

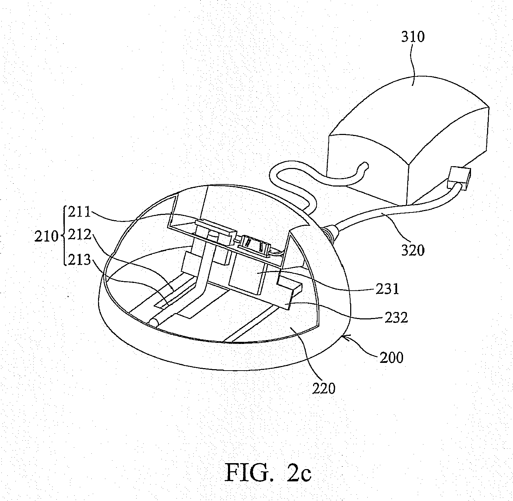

As shown in Fig. 2c, the battery charger 200 comprises a heat-dissipation module 210, a chamber 220, a second circuit board 232, an universal serial bus (USB) plug 231, a commutator 310 and a data line 320. The heat-dissipation module 210 and the second circuit board 232 are disposed in the chamber 220. The second circuit board 232 and the USB plug 231 compose a charger module. The commutator 310 and the data line 320 are coupled to the second circuit board 232. The commutator 310 supplies charging power. The data line 320 transmits data signals. The USB plug 231 is coupled to the second circuit board 232. The charging power and the data signals are transferred to the portable electronic device 100 via the USB plug 231. The heat-dissipation module 210 comprises a heat-transfer element 211, a heat-dissipation element 212 and a heat pipe 213. The heat pipe 213 comprises a vaporizing end and a condensing end. The heat-transfer element 211 contacts the vaporizing end, and the heat-dissipation end 212 contacts the condensing end. The heat-transfer element 211 is L-shaped and comprises copper. The heat-dissipation element 212 comprises copper.

In a modified example, the commutator 310 can also be eliminated from the battery charger 200, and the battery charger 200 receives electric power and data signals through the data line 320.

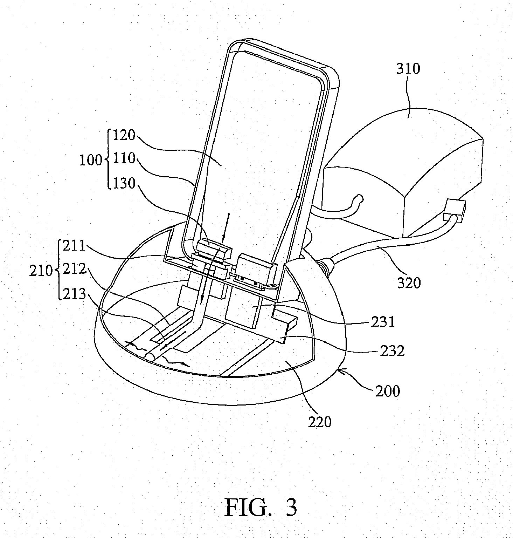

With reference to Fig. 3, the USB plug 231 is connected to the USB port for supplying electric power when the portable electronic device 100 is disposed on the battery charger 200. As shown by the arrow in Fig. 3, heat of the first circuit board 120 passes the heat-transfer module 130, the heat-transfer element 211 and the heat pipe 213, and is transferred to the heat-dissipation element 212. The inner temperature of the portable electronic device 100 is thus reduced.

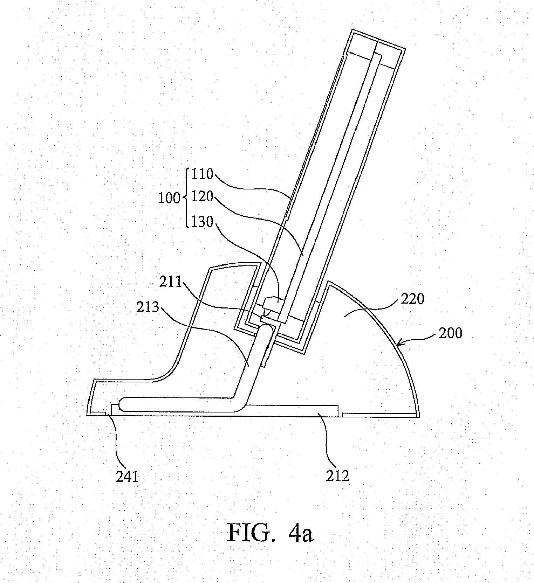

Fig. 4a is a sectional view of the portable electronic device 100 and the battery charger 200 along the direction A-A of Fig. 2a, wherein the heat-transfer element 211 is inserted into the housing 110 through the first opening. The heat-transfer module 130 abuts the heat-transfer element 211 by the weight of the portable electronic device 100, and transfers heat via conduction.

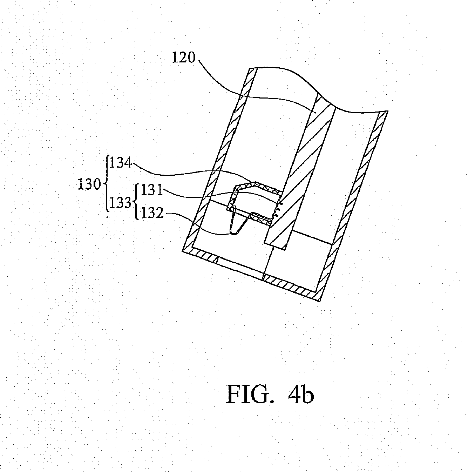

Fig. 4b shows the heat-transfer module 130 and nearby structures. The heat-transfer module 130 comprises a metal sheet 133 and a housing 134. The metal sheet 133 is partially disposed in the housing 134. The metal sheet 133 is made of copper, and comprises a first portion 131 and a second portion 132. The second portion 132 is a U-shaped elastic structure. In a first position, the second portion 132 does not contact the heat-transfer element. The first portion 131 contacts the first circuit 120, transferring heat therefrom.

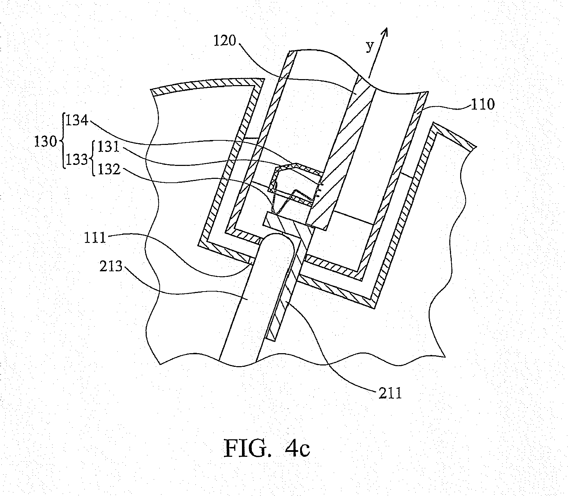

As shown in Fig. 4c, when the portable electronic device is placed on the battery charger, the heat-transfer element 211 is inserted into the housing 110 through the first opening 111 in a first direction y (an insertion direction of the first opening 111). The second portion 132 is moved to a second position in the first direction y by the weight of the portable electronic device when the second portion 132 abuts the heat-transfer element 211. The second portion 132 sufficiently contacts the heat-transfer element 211, and heat of the first circuit board 120 passes the first portion 131 and the second portion 132 to the heat-transfer element 211 via conduction.

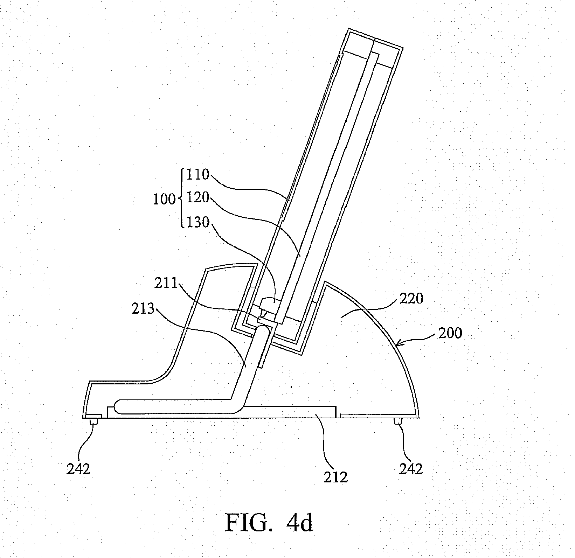

As show in Fig. 4a, a second opening 241 is formed at the bottom of the chamber 220. The heat-dissipation element 212 is disposed in the second opening 241. The heat-dissipation element 212 thus contacts a supporting surface (for example, table surface) for dissipating heat via conduction. As shown in Fig. 4d, a protrusion structure 242 can be further disposed on the bottom of the battery charger 200. Thus, the heat-dissipation 212 contacts external air, and dissipates heat via convection. The heat-dissipation element 212 increases the weight of the battery charger 200 and improves stability thereof.

### Second embodiment

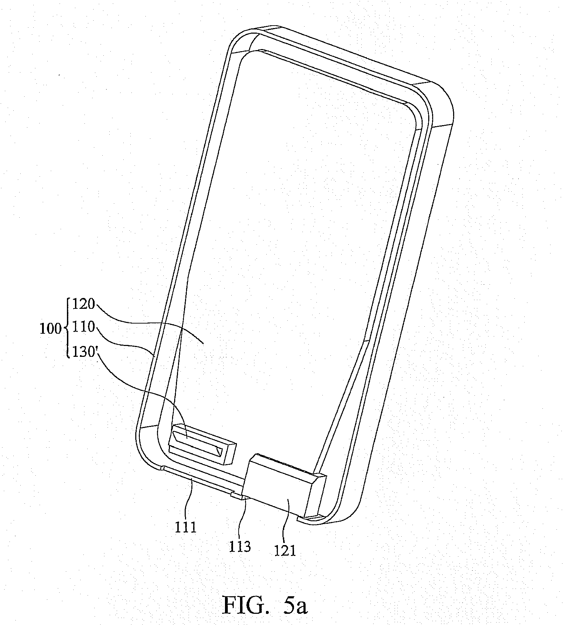

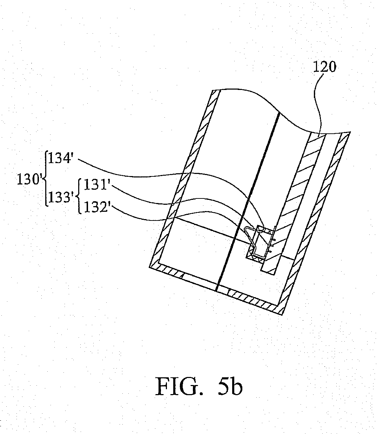

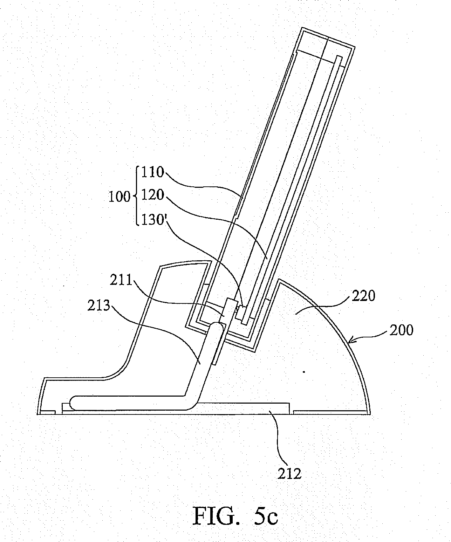

Fig. 5a shows a second embodiment of the invention, which differs from the first embodiment in the heat-transfer module 130'. Fig. 5b shows the heat-transfer module 130 and nearby structures. In the second embodiment, the first circuit board 120 nears a back side of the portable electronic device. The heat-transfer module 130' comprises a metal sheet 133' and a housing 134'. The metal sheet 133' is partially disposed in the housing 134'. The metal sheet is of copper, and comprises a first portion 131' and a second portion 132'. The second portion 132' is an elastic structure. When the second portion 132' is in a first position, it does not contact the heat-transfer element. The first position 131' contacts the first circuit board 120' and transmits heat therefrom.

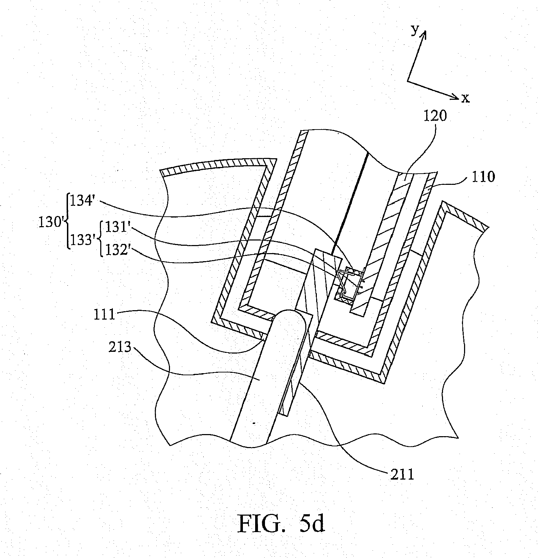

With reference to Fig. 5c, when the portable electronic device 100 is placed in the battery charger 200, the second portion 132' abuts the heat-transfer element 211 via elastic force. With reference to Fig. 5d, the heat-transfer element 211 is inserted into the housing 110 through the first opening 111 in a first direction y (an insertion direction of the first opening 111), and the second portion 132' is moved to a second position in a second direction x. The second direction x is perpendicular to the first direction y. Heat is transferred from the first circuit board 120, passing the first portion 131' and the second portion 132' to the heat-transfer element 211 via conduction.

The invention lowers an inner temperature of the portable electronic device, extends lifespan thereof, and prevents explosion of the battery.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation to encompass all such modifications and similar arrangements.

## Claims

1. A portable electronic device, comprising:
a housing, comprising a first opening;
a first circuit board, disposed in the housing; and
a heat-transfer module, comprising a metal sheet disposed on the first circuit board,
wherein the metal sheet comprises a first portion and a second portion, the first portion contacts the first circuit board, the second portion is located in the first opening, and heat in the portable electronic device is removed via the heat-transfer module.

2. The portable electronic device as claimed in claim 1, wherein the first circuit board comprises an isolation region, and the heat-transfer module is disposed thereon.

3. The portable electronic device as claimed in claim 1 or 2, wherein the first portion is inserted into the first circuit board.

4. The portable electronic device as claimed in any of the preceding claims, wherein the second portion is U-shaped.

5. The portable electronic device as claimed in any of the preceding claims, wherein the second portion is an elastic structure.

6. The portable electronic device as claimed in claim 5, wherein when a force is applied on the second portion, the second portion is recoverably moved in a first direction parallel to an insertion direction of the first opening.

7. The portable electronic device as claimed in claim 5, wherein when a force is applied on the second portion, the second portion is recoverably moved in a second direction perpendicular to an insertion direction of the first opening.

8. The portable electronic device as claimed in any of the preceding claims, wherein the metal sheet comprises copper.

9. A heat-dissipation method, comprising:
providing a portable electronic device as claimed in any of the preceding claims and a heat-dissipation module;
contacting the heat-dissipation module to the second portion, for removing heat from the portable electronic device; and
dissipating heat through the heat-dissipation module via convection or conduction.

10. A heat-dissipation method, comprising:
providing a portable electronic device as claimed in any of claims 1 to 8 and a battery charger, wherein the battery charger comprises a heat-dissipation module;
contacting the heat-dissipation module to the second portion, for removing heat from the portable electronic device; and
dissipating heat through the heat-dissipation module via convection or conduction.

11. A battery charger, comprising:
a chamber;
a heat-dissipation module, disposed in the chamber, comprising a heat-transfer element, a heat pipe and a heat-dissipation element, wherein the heat-transfer element contacts the heat pipe, and the heat pipe contacts the heat-dissipation element; and
a battery charger, disposed in the chamber.

12. The battery charger as claimed in claim 11, wherein the heat-transfer element is L-shaped.

13. The battery charger as claimed in claim 11 or 12, wherein the heat pipe comprises a vaporizing end and a condensing end, the vaporizing end contacts the heat-transfer element, and the condensing end contacts the heat-dissipation element.

14. The battery charger as claimed in any of claims 11 to 13, wherein the heat-dissipation element is disposed at the bottom of the chamber.

15. The battery charger as claimed in any of claims 11 to 14, wherein the chamber comprises a second opening, and the heat-dissipation element is disposed therein.

16. The battery charger as claimed in claim 15, wherein the second opening is formed at the bottom of the chamber.

17. The battery charger as claimed in claim 16, further comprising at least one protrusion, disposed at the bottom thereof.

18. The battery charger as claimed in any of claims 11 to 17, wherein the heat-transfer element comprises copper.

19. The battery charger as claimed in any of claims 11 to 18, wherein the heat-dissipation element comprises copper.

20. A heat-dissipation method, comprising:
providing a portable electronic device as claimed in any of claims 1 to 8 and a battery charger as claimed in any of claims 11 to 19;
contacting the heat-dissipation module to the second portion, for removing heat from the portable electronic device; and
dissipating heat through the heat-dissipation module via convection or conduction.

21. The heat-dissipation method as claimed in claim 20, wherein the heat-transfer element is inserted into the first opening.

22. The heat-dissipation method as claimed in claim 20 or 21, wherein the second portion abuts the heat-transfer element via gravity.

23. The heat-dissipation method as claimed in claim 20 or 21, wherein the second portion abuts the heat-transfer element via elastic force.
